# EUROPEAN PATENT SPECIFICATION

(11) **EP 3 949 000 B1**
(45) Date of publication and mention of the grant of the patent: **30.04.2025**
(21) Application number: 19716326.4
(22) Date of filing: 28.03.2019
(51) Int. Cl.: H01M 10/0567, H01M 10/0525, H01M 4/525, H01M 4/485, H01M 4/587, H01M 10/0568, H01M 10/0569

(54) **LITHIUM BATTERY COMPRISING A UREA-BASED COMPOUND AS ELECTROLYTE ADDITIVE**
LITHIUMBATTERIE UMFASSEND EINE HARNSTOFF-BASIERTE VERBINDUNG ALS ELEKTROLYTADDITIV
BATTERIE AU LITHIUM COMPRENANT UN COMPOSÉ À BASE D'URÉE EN TANT QU'ADDITIF D'ÉLECTROLYTE

(43) Date of publication of application: 09.02.2022
(73) Proprietor: Bayerische Motoren Werke Aktiengesellschaft, 80809 München (DE); Contemporary Amperex Technology Co., Limited, Ningde City, Fujian 352100 (CN)
(72) Inventor: Reiter, Jakub, 81735 MÜNCHEN (DE); Terborg, Lydia, 80805 MÜNCHEN (DE); Klein, Sven, 45739 OER-ERKENSCHWICK (DE); Qi, Xin, 48151 MÜNSTER (DE); Placke, Tobias, 48149 MÜNSTER (DE); Winter, Martin, 48149 MÜNSTER (DE); Wang, Xiqing, WINDERMERE, Florida 34786 (US); Schmiegel, Jan-Patrick, 48147 MÜNSTER (DE)
(74) Representative: Epping - Hermann - Fischer
(86) International application number: PCT/EP2019/057886
(87) International publication number: WO 2020/192927

(56) References cited:
- CN-A- 105 428 703
- CN-A- 107 845 831
- JP-A- 2009 252 645
- US-A1- 2014 038 063
- US-A1- 2018 316 061

## Description

The present invention relates to a lithium battery and use of a urea-based electrolyte additive as an electrolyte additive therein.

Conceptually, there should be no net chemical changes during the operation of the battery in the electrolyte, and all Faraday processes should be performed within the electrodes. Therefore, the electrolyte can be regarded as an inert component in the battery, and therefore must be stable both against cathode and anode surfaces. This electrochemical stability of the electrolyte, which is usually realized in a kinetic (passivation) and not a thermodynamic manner in actual devices, is of particular importance for rechargeable battery systems, even though these are difficult to fulfil because of the strong oxidizing and reducing nature of the cathode and anode.

A basic prerequisite for the components used in the electrolyte for lithium-ion batteries, especially solvents, is therefore that they are anhydrous or more precisely aprotic; that is, the solvent must not contain active protons which can react with lithium. In addition, the solvent should be in a liquid state in the service temperature range.

A disadvantage of conventional electrolytes based on lithium hexafluorophosphate in carbonates for lithium-ion batteries is in particular the low oxidative stability of 4.5 V against Li / Li⁺. The electrolyte is stable only up to this potential, whereas outside this range the oxidative decomposition of the electrolyte and associated degradation of the cathode material occur.

Lithium-nickel-manganese-cobalt oxides, also referred to as "NCM" or "NMC" ("NCM" will be used in the following), are one preferred cathode active material for lithium-ion batteries with a high energy density or high power density. However, also in this case decomposition of the electrolyte and the degradation of the cathode material occurs at 4.4 V. The result is a low cycle stability and therefore battery life. Each of documents CN 105428703 A, JP 2009 252645 A, and CN 107 845 831 A discloses the use of N,N-carbonyl diimidazole in lithium batteries.

US 2014/038063 A1 describes a non-aqueous electrolytic solution comprising LiPF₆ dissolved in a carbonate-based solvent, and an urea-based additive, such as N,N'-bis(acryloyloxyethyl)urea or tetrakis(acryloyloxymethyl)urea, and the use thereof in a lithium secondary battery having a graphite-based anode and a NCM-based cathode.

US 2018/316061 A1 relates to an electrolyte for energy storage device, comprising an electrolyte salt dissolved in an urea-based compound, such as N-methyl urea, N,N'-dimethyl urea, 1,1-dimethyl urea, tetramethyl urea, N-ethyl urea 1,3-diethyl urea or 1,1-diethyl urea, which is used as solvent or co-solvent.

The object of the present invention is to provide a lithium battery with improved stability.

This object is achieved according to the invention in a first aspect by a lithium battery according to claim 1, in a second aspect by the use of the urea-based electrolyte additive in a lithium battery as defined in the first aspect according to claim 10. Preferred embodiments are shown in the dependent claims.

The following definitions apply, if applicable, to all aspects of the invention.

### Lithium battery

According to the present invention, the terms "lithium battery", "lithium ion battery", "rechargeable lithium ion battery" and "lithium ion secondary battery" are used synonymously. The terms also include the terms "lithium-ion accumulator" and "lithium-ion cell" as well as all lithium or alloy batteries. Thus, the term "lithium battery" is used as a generic term for the aforementioned terms used in the prior art. It means both rechargeable batteries (secondary batteries) as well as non-rechargeable batteries (primary batteries). In particular, a "battery" for the purposes of the present invention also comprises a single or only "electrochemical cell". Preferably, two or more such electrochemical cells are connected together in a "battery", either in series (i.e., successively) or in parallel.

### Electrodes

The electrochemical cell according to the invention has at least two electrodes, i. e. a positive (cathode) and a negative electrode (anode).

Both electrodes each have at least one active material. This is capable of absorbing or emitting lithium ions and at the same time absorbing or emitting electrons.

The term "positive electrode" means the electrode which, when the battery is connected to a load, for example to an electric motor, is capable of receiving electrons. It is the cathode in this nomenclature.

The term "negative electrode" means the electrode which is capable of emitting electrons during operation. It represents the anode in this nomenclature.

The electrodes comprise inorganic material or inorganic compounds or substances which can be used for or in or on an electrode or as an electrode. These compounds or substances can, under the working conditions of the lithium-ion battery, accept (insert) and also release lithium ions due to their chemical nature. In the present specification, such material is referred to as "active cathode material" or "active anode material" or generally "active material". For use in an electrochemical cell or battery, this active material is preferably applied to a support or carrier, preferably to a metallic support, preferably aluminum for the cathode or copper for the anode. This support is also referred to as a "collector" or collector film.

### Cathode (positive electrode)

According to the present invention, the active material for the positive electrode or active cathode material comprises or preferably consists of nickel manganese cobalt oxide (NCM) having the general formula (LiNiₓCo_{y}Mn_{1-x-y}O₂) with each of x and y not including zero and x + y being smaller than 1. By changing the content of each transition metal, for example, LiNiₓCo_{y}Mn_{1-x-y}O₂ selected from the group consisting of LiNi_{1/3}Co_{1/3}Mn_{1/3}O₂ (NCM-111), LiNi_{0.5}Co_{0.2}Mn_{0.3}O₂ (NCM-523), LiNi_{0.6}CO_{0.2}Mn_{0.2}O₂ (NCM-622), LiNi_{0.7}Co_{0.15}Mn_{0.15}O₂, LiNi_{0.8}Co_{0.1}Mn_{0.1}O₂ (NCM-811), LiNi_{0.85}Co_{0.075}Mn_{0.075}O₂ and mixtures thereof can be used.

The active material may also contain mixtures of the above active cathode material with a second or more of, for example, one of the following active cathode materials.

More specifically, as the second active material for the positive electrode or active cathode material all materials known from the related art can be used. These include, for example, LiCoO₂, NCA, high-energy NCM or HE-NCM, lithium-iron phosphate (LFP), Li-Manganese spinel (LiMn₂O₄), Li-Manganese nickel oxide (LMNO) or lithium-rich transition metal oxides of the type (Li₂MnO₃)ₓ(LiMO₂)₁₋ₓ. Preferably, a material selected from a group consisting of a lithium-transition metal oxide (hereinafter also referred to as "lithium metal oxide"), layered oxides, spinels, olivine compounds, silicate compounds, and mixtures thereof is used as such a second active cathode material. Such active cathode materials are described, for example, in Bo Xu et al. "Recent progress in cathode materials research for advanced lithium ion batteries", Materials Science and Engineering R 73 (2012) 51-65. Another preferred cathode material is HE-NCM. Layered oxides and HE-NCM are also described in the patents US Pat. Nos. 6,677,082 B2, 6,680,143 B2 and US Pat. No. 7,205,072 B2 of Argonne National Laboratory.

Examples of olivine compounds are lithium phosphates of the sum formula LiXPO₄ with X = Mn, Fe, Co or Ni, or combinations thereof.

Examples of lithium metal oxide, spinel compounds and layered oxides are lithium manganate, preferably LiMn₂O₄, lithium cobaltate, preferably LiCoO₂, lithium nickelate, preferably LiNiO₂, or mixtures of two or more of these oxides or mixed oxides thereof.

In order to increase the electrical conductivity, further compounds may be present in the active material, preferably carbon-containing compounds, or carbon, preferably in the form of conductive carbon black or graphite. The carbon can also be introduced in the form of carbon nanotubes. Such additives are preferably applied in an amount of from 0.1 to 10% by weight, preferably from 1 to 8% by weight, based on the mass of the positive electrode applied to the support.

### Anode (negative electrode)

The active material for the negative electrode or active anode material can be any of the materials known from the related art. Thus, according to the present invention there is no limitation with regard to the negative electrode. In particular, it is also possible to use mixtures of different active anode materials.

The active anode material may be selected from the group consisting of lithium metal oxides, such as lithium titanium oxide, metal oxides (e.g. Fe₂O₃, ZnO, ZnFe₂O₄), carbonaceous materials such as graphite (synthetic graphite, natural graphite) graphene, mesocarbon , doped carbon, hard carbon, soft carbon, fullerenes, mixtures of silicon and carbon, silicon, lithium alloys, metallic lithium and mixtures thereof. Niobium pentoxide, tin alloys, titanium dioxide, tin dioxide, silicon or oxides of silicon can also be used as the electrode material for the negative electrode.

The active anode material may also be a material alloyable with lithium. This may be a lithium alloy or a non-lithiated or partially lithiated precursor to this, resulting in a lithium alloy formation. Preferred lithium-alloyable materials are lithium alloys selected from the group consisting of silicon-based, tin-based and antimony-based alloys. Such alloys are described, for example, in the review article W.-J. Zhang, Journal of Power Sources 196 (2011) 13-24.

### Electrode binders

The materials used for the positive or for the negative electrode, such as the active materials, are held together by one or more binders which hold these materials on the electrode or on the current collector.

The binder(s) may be selected from the group consisting of polyvinylidene fluoride (PVdF), polyvinylidene fluoride-hexafluoro-propylene co-polymer (PVdF-HFP) polyethylene oxide (PEO), polytetrafluoroethylene, polyacrylate, styrene-butadiene rubber (SBR), and (sodium-)carboxymethylcellulose (CMC), and mixtures and copolymers thereof. Styrene-butadiene rubber and optionally carboxymethylcellulose and / or the other binders such as PVdF are preferably present in an amount of 0.5-8% by weight based on the total amount of the active material used in the positive or negative electrode.

### Separator

The lithium battery according to the invention preferably has a material which separates the positive electrode and the negative electrode from each other. This material is permeable to lithium ions, i.e. it emits lithium ions, but is a non-conductor for electrons. Such materials used in lithium ion batteries are also referred to as separators.

In a preferred embodiment within the meaning of the present invention, polymers are used as separators. In one embodiment, the polymers are selected from the group consisting of: cellulose, polyester, preferably polyethylene terephthalate; polyolefin, preferably polyethylene, polypropylene; polyacrylonitrile; polyvinylidene fluoride; polyvinylidene hexafluoropropylene; polyetherimide; polyimide, polyether; polyether ketone or mixtures thereof. The separator has porosity so that it is permeable to lithium ions. In a preferred embodiment within the meaning of the present invention, the separator consists of at least one polymer.

### Electrolyte

The term "electrolyte" preferably means a liquid in which a lithium conducting salt is dissolved, preferably the liquid is a solvent for the conducting salt, and the Li conductive salt is preferably present as an electrolyte solution. According to the present invention LiPF₆ is used as lithium conductive salt. It is possible to use a second or more conductive salts, such as LiBF₄.

The two aspects of the present invention will be described in more detail below.

In a first aspect, the present invention relates to a lithium battery comprising an anode comprising an active anode material, a cathode comprising an active cathode material comprising lithium nickel manganese cobalt oxide according to the general formula (LiNiₓCo_{y}Mn_{1-x-y}O₂) with each of x and y not including zero and x + y being smaller than 1, a separator separating anode and cathode, and an electrolyte, wherein the electrolyte comprises a solvent or solvent mixture and lithium hexafluorophosphate, wherein the electrolyte further comprises an urea-based electrolyte additive, wherein the urea-based electrolyte additive is (1H-imidazol-1-yl) (morpholino)methanone (MUI) of formula 2

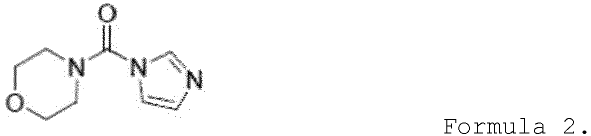

Surprisingly, it has been found that the lithium battery according to the present invention comprising NCM as active cathode material and the urea-based electrolyte additive of formula 1 as electrolyte additive, compared to the electrolyte without additive exhibits higher cycle stability and service life. In addition, degradation of the cathode material is suppressed. Finally, a lower self-discharge occurs.

Without being bound to a theory, it is believed that the presence of the urea-based electrolyte additive of formula 1 in the electrolyte leads to an increase of the lithiation/delithiation potential of the cathode, expressed by an overpotential in the first and ongoing cycles. Upon cycling up to 4.6 V, the cells containing 0.1 wt.% of the urea-based electrolyte additive show a superior cycling stability in comparison to those with the plain reference electrolyte. The addition of the urea-based electrolyte additive to an electrolyte containing LiPF₆ thus causes in situ formation of a cathode passivation layer or cathode-electrolyte-interphase (CEI) on the NCM active cathode material which is particularly effective at charge terminating potentials of more than 4.4 V against Li / Li⁺ and kinetically inhibits the release of metals from the active cathode matrix and the oxidative decomposition of the electrolyte.

The urea-based electrolyte additive is usable in a wide temperature range, is relatively non-toxic, and readily available.

The urea-based electrolyte additive is therefore advantageously suitable as an additive for LiPF₆-containing electrolytes for commercial lithium-ion batteries based on NCM active cathode materials.

Preferably, the electrolyte according to the invention comprises the urea-based electrolyte additive, dissolved in an organic solvent. The electrolyte is, for example, obtainable by introducing and dissolving lithium hexafluorophosphate and the the urea-based electrolyte additive, in particular (1H-imidazol-1-yl) (morpholino)methanone (MUI), into a solvent or a solvent mixture. Alternatively, the urea-based electrolyte additive can be mixed with the cathode active material when producing the cathode. This also leads to the dissolution of the urea-based electrolyte additive into the electrolyte and the formation of a cathode passivation layer or cathode-electrolyte-interphase (CEI) on the NCM active cathode material.

In preferred embodiments, from 0.01 to 10% by weight, preferably from 0.1 to 5% by weight, preferably from 0.2 to 1% by weight, in particular from 0.25 to 0.75% by weight of the urea-based electrolyte additive, in terms of the amount of electrolyte used comprising lithium hexafluorophosphate in a solvent or solvent mixture.

In preferred embodiments, the concentration of lithium hexafluorophosphate in the electrolyte is in the range from > 0.1 M to < 2 M, preferably in the range from > 0.5 M to <1.5 M, particularly preferably in the range from > 0.7 M to < 1.2 M. In a particularly preferred embodiment, the concentration of lithium hexafluorophosphate in the electrolyte is 1 M. In preferred embodiments, the electrolyte comprises an organic solvent, an ionic liquid and / or a polymer matrix. Preferably, the electrolyte comprises lithium hexafluorophosphate, (1H-imidazol-1-yl) (morpholino)methanone (MUI), and an organic solvent. It has been found that the urea-based electrolyte additive has good solubility in organic solvents, especially in cyclic and / or linear carbonates. This advantageously allows the use of the urea-based electrolyte additive in LiPF₆-containing liquid electrolytes.

In preferred embodiments, the organic solvent is selected from the group consisting of ethylene carbonate (EC), propylene carbonate (PC), diethyl carbonate (DEC), dimethyl carbonate (DMC), ethyl methyl carbonate (EMC), acetonitrile, glutaronitrile, adiponitrile, pimelonitrile, gamma-butyrolactone, gamma-valerolactone, dimethoxyethane, dioxolane, methyl acetate, ethyl methane sulfonate, dimethyl methyl phosphonate and / or mixture thereof. Suitable organic solvents are, in particular, selected from the group consisting of cyclic carbonates such as ethylene carbonate and propylene carbonate and linear carbonates such as diethyl carbonate, dimethyl carbonate and ethyl methyl carbonate and mixtures thereof.

Preferably the organic solvent is selected from the group consisting of ethylene carbonate, diethyl carbonate, dimethyl carbonate, ethyl methyl carbonate and mixtures thereof. A preferred solvent is ethylene carbonate. Ethylene carbonate is also referred to as 1,3-dioxolan-2-one according to the IUPAC nomenclature. Ethylene carbonate is commercially available. Ethylene carbonate has a high boiling point and a high flame point. It is also advantageous that ethylene carbonate allows a high conductivity due to a good salt dissociation.

In a preferred embodiment, the organic solvent comprises a mixture of ethylene carbonate and at least one further organic solvent. Preference is also given to binary mixtures of carbonates, in particular of ethylene carbonate, with a further carbonate, for example diethyl carbonate, dimethyl carbonate and / or ethyl methyl carbonate, in particular ethyl methyl carbonate.

The ratio of ethylene carbonate and the at least one further organic solvent, preferably ethylmethyl carbonate, is preferably in the range from >1: 99 to <99: 1, preferably in the range from >1: 9 to <9: 1, in particular ≥3 : 7 to ≤1: 1. If not stated differently, the ratio indicated relates to the weight parts of the solvents. A high conductivity in a temperature range from -25 °C to +60 °C was advantageously achieved in a solvent mixture of ethylene carbonate and ethyl methyl carbonate in the ratio 1: 1.

Preference is also given to ternary mixtures comprising at least one carbonate as solvent. Particular preference is given to mixtures of ethylene carbonate with a further solvent, for example ethyl methyl carbonate, and a compound which is suitable for forming a so-called solid electrolyte interphase (SEI). The electrolyte can therefore also comprise additives, in particular film-forming electrolyte additives. In preferred embodiments, the electrolyte comprises a compound selected from the group consisting of chloroethylene carbonate, fluoroethylene carbonate, vinylene carbonate, vinyl ethylene carbonate, ethylene sulfite, ethylene sulfate, propane sulfonates, sulfites, preferably dimethyl sulfite and propylene sulfite, sulfates, butyrolactones, phenylethylene carbonate, vinyl acetate and trifluoropropylene carbonate. Among the compounds based on carbonate, chlorine-substituted or fluorine-substituted carbonates are preferred, in particular fluoroethylene carbonate (FEC). The additives can improve the battery performance, for example the capacity or the cycle life. In particular, fluoroethylene carbonate can lead to improved long-term stability of a cell.

Preferably, the electrolyte contains at least one further additive, in particular a compound selected from the group consisting of chloroethylene carbonate, fluoroethylene carbonate, vinylene carbonate, vinyl ethylene carbonate, ethylene sulfite, ethylene sulfate, propane sulfonate, sulfite, preferably dimethyl sulfite and propylene sulfite, sulfate, butyrolactone optionally substituted by F, Cl or Br, phenylethylene carbonate, vinyl acetate, trifluoropropylene carbonate and mixtures thereof, preferably fluoroethylene carbonate, in the range from >0.1% by weight to <10% by weight, preferably in the range from >1% by weight to <5%, more preferably in the range from >2% by weight to <3% by weight, based on the total weight of the electrolyte.

The organic solvent preferably comprises a mixture of ethylene carbonate and at least one further organic solvent, preferably selected from the group consisting of linear carbonates, in particular ethyl methyl carbonate, and fluoroethylene carbonate.

Thus, fluoroethylene carbonate can form a protective layer on a graphite anode and reduce excess potentials of the electrode. Ionic liquids have also proved to be very promising solvents because they combine a high thermal as well as electrochemical stability with a high ionic conductivity. In particular, this is advantageous for use with lithium-2-methoxy-1, 2,2-tetrafluoro-ethanesulfonate. Preferred ionic liquids include a cation selected from the group consisting of 1,2-dimethyl-3-propylimidazolium (DMPI +), 1,2-diethyl 3,5-dimethylimidazolium (DEDMI +), N-alkyl-N-methylpiperidinium (PIPIR +), N-alkyl-N-methylmorpholinium (MORPIR +) and mixtures thereof and an anion selected from the group consisting of trimethyl-n-hexylammonium (TMHA +) and N-alkylpyrrolidinium comprising bis (trifluoromethanesulfonyl) imide (TFSI), bis (pentafluoroethanesulfonyl) imide (BETI), bis (fluorosulfonyl) imide (FSI), 2,2,2-trifluoro-N-(trifluoromethanesulfonyl) acetamide (TSAC) Tetrafluoroborate (BF4-), pentafluoroethane trifluoroborate (C₂FsBF₃-), hexafluorophosphate (PF₆-), tris (pentafluoroethane) trifluorophosphate ((C₂F₅) 3PF₃-), and mixtures thereof.

Preferred N-alkyl-N-methylpyrrolidinium (PYRIR +) cations are selected from the group consisting of N-butyl-N-methylpyrrolidinium (PYR14 +), N-methyl-N-propylpyrrolidinium (PYR13 +) and mixtures thereof.

Preferred ionic liquids are selected from the group consisting of N-butyl-N-methylpyrrolidinium bis (trifluoromethanesulfonyl) imide (PYR14TFSI), N-methyl-N-propylpyrrolidinium bis (trifluoromethanesulfonyl) imide (PYR13TFSI), and mixtures thereof.

Further suitable electrolyte materials are polymer electrolytes, where the polymer electrolyte can be present as gel polymer electrolyte or solid polymer electrolyte. Solid polymer electrolytes exhibit good properties with regard to the requirements for future accumulator generations. They allow for a solvent-free construction, which is easy to manufacture and manifold in shape. In addition, the energy density can be increased since the three-layer structure made of electrolyte separator electrolyte is omitted so that only a thin polymer film is required between the electrodes. Solid electrolytes are generally chemically and electrochemically stable to electrode materials and do not escape from the cell. Gel polymer electrolytes usually comprise an aprotic solvent and a polymer matrix.

Preferred polymers for solid polymer electrolytes and gel polymer electrolytes are selected from the group consisting of homo- or copolymers of polyethylene oxide (PEO), polypropylene oxide (PPO), polyvinylidene fluoride (PVdF), polyvinylidenefluoridehexafluoropropylene (PVdF-HFP), polyacrylonitrile (PAN), polymethylmethacrylate (PMMA), Polyethylmethacrylate (PEMA), polyvinyl acetate (PVAc), polyvinyl chloride (PVC), polyphophazenes, polysiloxanes, polyvinyl alcohol (PVA), homo- and (block) copolymers comprising functional side chains selected from the group consisting of ethylene oxide, propylene oxide, acrylonitrile, siloxanes and mixtures thereof.

According to the present invention, the active material for the positive electrode or active cathode material comprises or preferably consists of lithium nickel manganese cobalt oxide LiNiₓMn_{y}Co_{z}O₂ (NCM),wherein 0<x<1, 0<y<1, 0<z<1, and x+y+z=1. Alternatively, the general formula (LiNiₓCo_{y}Mn_{1-x-y}O₂) with each of x and y not including zero and x + y being smaller than 1 can be used. LiNiₓCo_{y}Mn_{1-x-y}O₂ materials with 0.3≤x<1 are preferred, such as materials selected from the group consisting of LiNi_{1/3}Co_{1/3}Mn_{1/3}O₂ (NCM-111), LiNi_{0.5}Co_{0.2}Mn_{0.3}O₂ (NCM-523), LiNi_{0.6}Co_{0.2}Mn_{0.2}O₂ (NCM-622), LiNi_{0.7}Co_{0.15}Mn_{0.15}O₂, LiNi_{0.8}Co_{0.1}Mn_{0.1}O₂ (NCM-811), LiNi_{0.85}Co_{0.075}Mn_{0.075}O₂ and mixtures thereof. More preferred are Ni-rich NMCs with 0.5≤x<1 due to their higher specific capacity of 180-190 mAh g⁻¹ at the upper cut-off potential of 4.3 V vs. Li/Li⁺, with NCM-622 and NCM-811 being still more preferred and NCM-811 being in particular preferred.

In addition, a disproportionation and dissolution of manganese, as well as other transition metals, from the active cathode material can be further kinetically inhibited in the NCM-cathode active materials by the addition of lithium 2-pentafluoroethoxy-1,1,2-tetrafluoroethane sulfonate to the electrolyte containing LiPF₆.

In preferred embodiments, the anode comprises an active anode material selected from a group consisting of carbon, graphite, mixtures of silicon and carbon / graphite, silicon, lithium, lithium metal oxide, lithium-alloyable materials, and mixtures thereof. Graphite is particularly preferred.

In a second aspect of the invention, the present invention is directed to the use of the urea-based electrolyte additive as additive in a lithium battery as defined in the first aspect of the present invention for enhancing one characteristic selected from the group consisting of reversible capacity, Coulombic efficiency, cyclic stability, capacity retention, and combinations thereof.

The lithium-ion battery according to the invention is suitable for all uses in all high-energy, long-life applications, such as electric vehicles and energy storage systems, in particular in automotives, because of its high-voltage stability.

Examples and Figures which serve to illustrate the present invention are given below.

The Figures show:
Figure 1: Charge/discharge cycling stability data of the NCM111/graphite cells with 0.1 wt.% MUI as electrolyte additive in comparison to the reference electrolyte (RE). Cut-off voltages: 2.8 - 4.6 V.
Figure 2: Cathode and anode potential profiles for NCM111/graphite cells with RE and RE + 0.1 wt.% MUI. a) in the 1^{st} charge/discharge cycle and b) in the 50^{th} charge/discharge cycle. Cut-off cell voltages: 3.0 - 4.6 V.
Figure 3: a) Cyclic voltammograms of graphite/Li metal cells with RE and RE +1.0 wt.% MUI between 0.05 V and 1.5 V vs. Li/Li⁺, and b) between 0.5 V and 1.0 V vs. Li/Li⁺.
Figure 4: a) Cyclic voltammograms of LNMO/Li metal cells with RE and RE +1.0 wt.% MUI between 3.5 V and 5.0 V vs. Li/Li⁺, and b) between 4.3 V and 4.8 V vs. Li/Li⁺.
Figure 5: a) Cathode and anode potential profiles for NCM111/LTO cells with RE and RE + 1.0 wt.% and 0.1 wt.% MUI in the first charge/discharge cycle and b) the corresponding cathode potential profiles during constant potential step during the charge processes. Cut-off cell voltages: 1.5 - 3.1 V.
Figure 6: Proposed fragmentation and subsequent dimerization reaction of MUI.
Figure 7: Positive ToF-SIMS spectra of NCM111 cathodes extracted from NCM111/LTO cells after 25 cycles and cycled in the a) RE and b) 1.0 wt.% MUI containing electrolyte. Bi³⁺ (30 keV) used as primary ions.
Figure 8: Positive depth-profiling ToF-SIMS spectra of NCM111 cathodes extracted from NCM111/LTO cells after 25 cycles and cycled in a) RE and b)/c) RE + 1.0 wt.% MUI. In c) the sputter depth profiles were acquired with the Cs sputter gun instead of Ar-GCIB. Sputtering was performed with Ar-GCIB (5 keV, a), b)) or Cs gun (1keV, c)). Sputtering area: 400 x 400 µm. Bi1+ (30 keV) are used as primary ions with a rastered area of 200 x 200 µm.
Figure 9: a) Mn 2p, b) N 1s and c) O 1s XPS spectra of the cathodes cycled in RE and 1.0 wt.% MUI-containing electrolyte, extracted from NCM111/LTO cells after 25 cycles.
Figure 10: Charge/discharge cycling stability data of the NCM111/graphite cells with 0.1 wt.% AUI or 0.1 wt.% MUM as electrolyte additive in comparison to the reference electrolyte (RE). Cut-off voltages: 2.8 - 4.6 V.

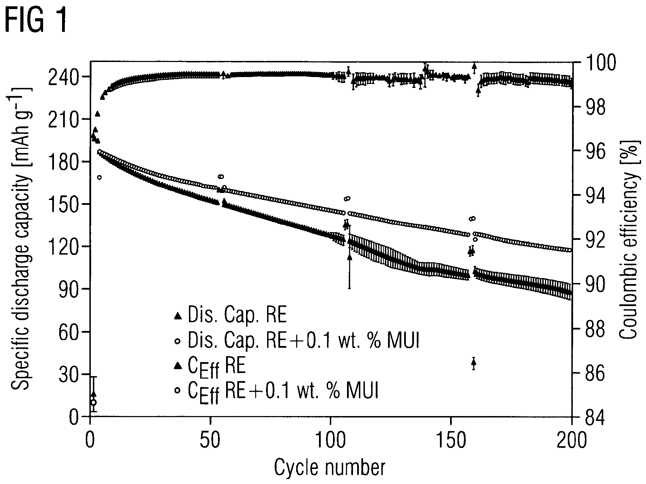

The mean values as well as the standard deviation of three cells for the charge/ discharge cycling performance of NCM111/graphite cells, with and without 0.1 wt.% MUI as electrolyte additive, are shown in Figure 1. Additionally, the values for the specific discharge capacity and the corresponding Coulombic efficiency (C_{Eff}) at selected cycles are listed in Table 1 below.

**Table 1**

| **Cycle No.** | **RE + 0.1 wt. . % MUI** | | | **RE** | | |
|---|---|---|---|---|---|---|
| | Dis. Cap. | C_{Eff} | Cap. retention (Cycle/4^{th}) | Dis. Cap. | C_{Eff} | Cap. Retention (Cycle/4^{th}) |
| | [mAh g⁻¹[ | [%] | [%] | [mAh g⁻¹] | [%] | [%] |
| **1^{st} (0.1C)** | 197.3 ± 0.68 | 84.6 ± 0.16 | | 197.5 ± 0.84 | 84.9 ± 0.74 | |
| **4^{th} (0.3C)** | 185.8 ± 0.55 | 94.8 ± 0.03 | 100 | 185.2 ± 0.41 | 94.9 ± 0.08 | 100 |
| **15^{th} (0.3C)** | 177.1 ± 0.49 | 99.0 ± 0.02 | 95.3 | 173.7 ± 0.61 | 99.1 ± 0.04 | 93.8 |
| **100^{th} (0.3C)** | 144.7 ± 1.74 | 99.4 ± 0.03 | 77.9 | 126.6 ± 2.56 | 99.4 ± 0.18 | 68.4 |
| **200^{th} (0.3C)** | 116.6 ± 0.85 | 99.4 ± 0.08 | 62.7 | 86.8 ± 5.26 | 98.9 ± 0.26 | 46.9 |

The additive concentration was set to 0.1 wt.% in terms of the total amount of electrolyte comprising lithium hexafluorophosphate in a solvent or solvent mixture to be consumed during the formation process and to form protective SEI (solid electrolyte interphase)/CEI-layers. Higher concentrations are in this case not necessary and in some cases even have a counter-productive effect on cell performance.

In the first three formation cycles, the cells with the RE and the MUI-containing electrolyte show a comparable discharge capacity (197.3 mAh g⁻¹ vs. 197.5 mAh g⁻¹) as well as a similar first C_{Eff} (84.6% vs. 84.9%). Thus, no distinguishable improvement on the reversible capacity and CEff within the formation cycles can be observed by adding MUI into the RE.

However, in the following cycles, at a charge/discharge rate of 0.3C (1C = 200 mA g⁻¹), the MUI-containing cells outperform the cells with RE, by strongly improving the capacity retention. In the 15^{th} cycle, the cells with MUI containing electrolyte possess a specific discharge capacity of 177.1 mAh g⁻¹, which is 95.3% of their initial capacity related to the cycle No. 4. Meanwhile, the cells with RE have a discharge capacity of 173.7 mAh g⁻¹, only 93.8% of their initial capacity.

The improvement by MUI on the long-term cycling performance becomes more significant after 100 cycles. The cells containing 0.1 wt.% MUI show an 18.1 mAh g⁻¹ higher discharge capacity (144.7 mAh g⁻¹ vs. 126.6 mAh g⁻¹), which are 77.9 and 68.4% of their initial capacity, respectively. After 200 cycles, the MUI containing cells outperform the cells with reference electrolyte by ≈30 mAh g⁻¹ (116.6 mAh g⁻¹ vs. 86.8 mAh g⁻¹), 62.7 and 46.9% respectively.

Without being bound to a specific theory with respect to the working mechanism of MUI in the NCM111/graphite cells upon charge/discharge, the electrode potentials are considered to have an extensive impact on cell performance and capacity fading. More specifically, a mutual influence between anode and cathode has to be considered during operation. Especially, in high voltage cells the cathode electrode potential has a significant influence on the capacity fading, as a several mV higher electrode potential can be the threshold for the structural deterioration and gas evolution. Therefore, the electrode potentials in the first and ongoing cycles are relevant to interpret the working mechanism of several SEI/CEI additives.

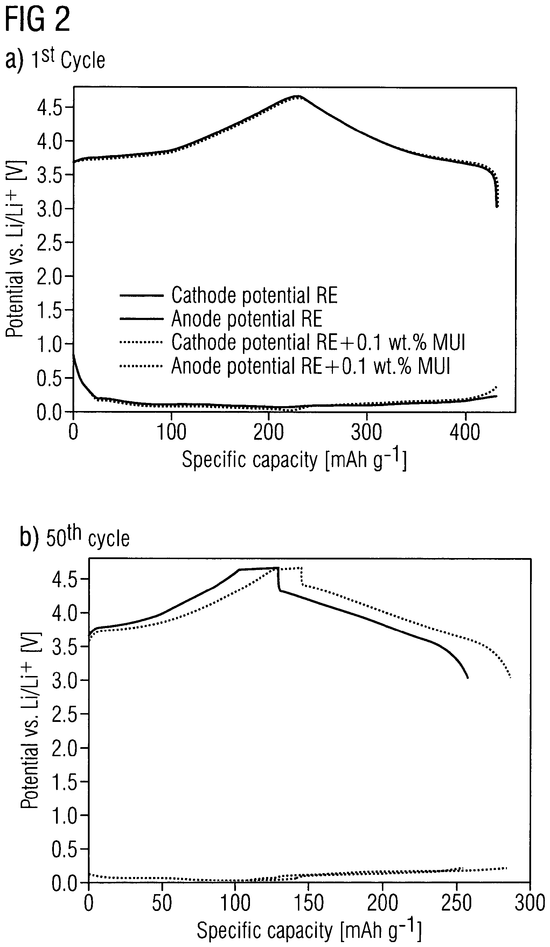

The electrode potential profiles for the first and 50^{th} cycle are depicted in Figure 2. The previously mentioned trend of a lower cathode potential at the end of the charging process is visible for additive containing cells, but does not correspond, as customarily expected, to a lower discharge capacity and/or lower C_{eff} (c.f. Figure 2a)). However, this effect is only noticeable in the first cycle and is negligible for the ongoing cycles, disproving the effectiveness of MUI by only decreasing the cathode potential as a result of a negative influence on the anode, and therefore improvement of the cell performance. Despite this, in the 50^{th} cycle (c.f. Figure 2b)) it is observable that less charge capacity is gained during the constant voltage step for cells containing MUI compared to the RE, indicating a less resistive and presumably also less thick SEI/CEI. In the RE, continuous electrolyte decomposition, resulting in an ongoing SEI/CEI growth is observable. SEI/CEI layer growth then concludes in an higher internal resistance increase and increased voltage drop at the transition from the charge to discharge step, thus leading to lower voltage efficiency and energy efficiency. By the addition of MUI it is possible to decelerate SEI/CEI layer growth caused by the ongoing electrolyte decomposition.

In order to classify the effectiveness of MUI, these results are compared to several well known electrolyte additives such as FEC and VC. To ensure a reproducible comparison, the additive concentration of FEC was beforehand optimized to a content of 1.0 wt.%.

In addition, the commercially available electrolyte composed of 1M LiPF₆ in EC:EMC (3:7 by weight, Solvionic, purity: battery grade) including 2.0 wt.% vinylene carbonate was investigated. In agreement with the recent literature, the usage of VC in high voltage cell is not applicable as a reason of the bulk oxidation of VC starting above 4.6 V vs. Li/Li⁺. The high concentration of VC in this electrolyte results in an impedance increase on both anode and cathode as well as worse cycling performance compared to the RE. For a beneficial effect of VC, the decomposition has to exclusively occur on the graphite anode by utilizing the entire amount of additive to prevent the unfavorable VC oxidation on the cathode. Therefore it has to be taken into account, that for high voltage application, VC is not a suitable reference electrolyte system, thus will not be considered hereinafter.

The MUI-containing electrolyte shows the highest discharge capacity and capacity retention after 200 cycles (62.5% vs. 55.9%). Despite having slightly higher first cycle Ceff (84.6% vs. 86.0%) and average Ceff (99.2% vs. 99.3%) cells containing FEC suffer from elevated capacity fading. The addition of at least 0.1 wt.% of MUI to the RE greatly enhances the overall cell performance. Despite this 10-fold reduced fraction of additive content, MUI is a very potent and therefore cost effective compound for the application in NMC/graphite cells. Moreover, this substance class is less toxic compared to many other literature known additives, such as phosphates and sultones.

### Electrochemical stability of (1H-imidazol-1-yl) (morpholino)methanone

The oxidative and reductive stability of the MUI electrolyte additive was investigated by means of CV measurements. These measurements are often conducted by using platinum or glassy carbon as working electrodes. A major drawback of this experimental setup is that both materials are model materials, thus, the electrochemical stability of electrolyte additives cannot be precisely correlated to the actual cell setup using real battery electrode materials, where the effects from transition metal ions and/or high specific surface area may not be excluded. Therefore, it is necessary to study the electrochemical stability of electrolyte additives on the electrodes with the same, or similar surface area and chemical composition. Unfortunately, NCM is not suitable for these investigations, due to a possible overlap of its delithiation potential and the oxidation potential of the additives. Consequently, LNMO cathodes can preferentially be used as their delithiation starts at 4.6 V vs. Li/Li⁺, which is beyond the cut-off voltage (4.6 V) of the NCM111/graphite cells.

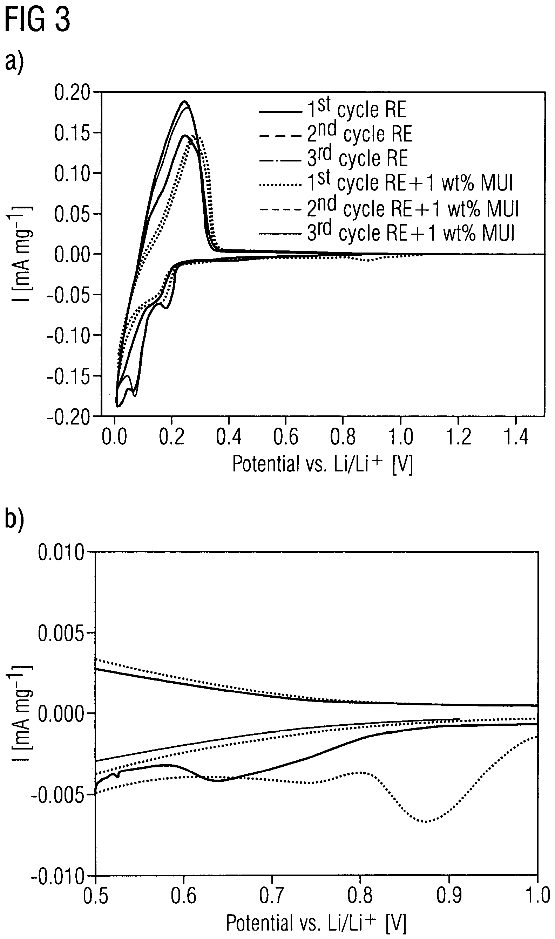

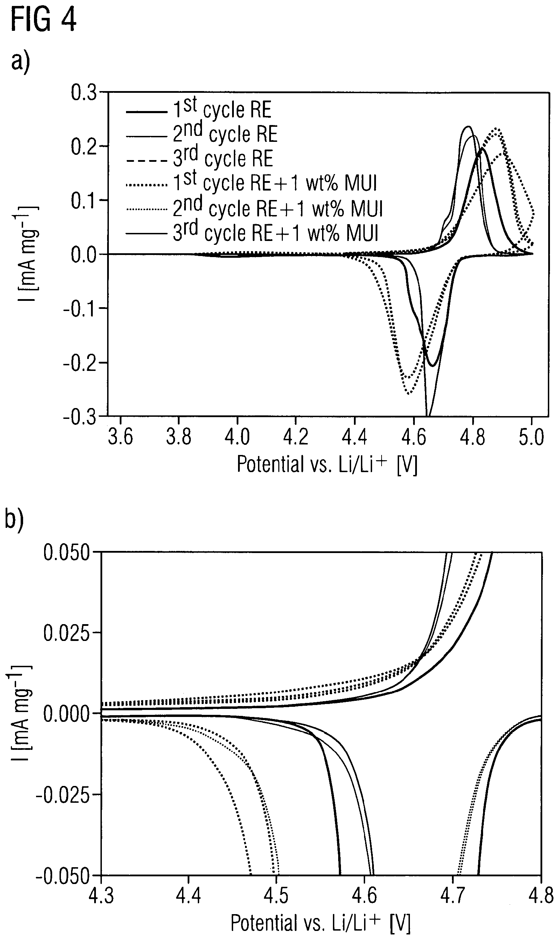

The cyclic voltammograms for the determination of the cathodic and anodic stabilities of 1.0 wt.% MUI-containing RE are depicted in Figure 3 and Figure 4, respectively. In the following, the concentration of MUI was increased to 1.0 wt.% to clearly identify the oxidative and reductive stability of MUI in this system. In the cathodic scan, a clear reduction peak (0.9 V vs. Li/Li⁺) of MUI on the graphite composite anode in the first cycle is evident (Figure 2b). Despite of this, the delithiation peak of graphite slightly shifted to a higher potential (0.27 V vs. Li/Li⁺) when MUI is present in the electrolyte, indicating an overpotential on the graphite anode, which might result in a kinetically hindered delithiation. The reduction of MUI starts at 0.9 V vs. Li/Li⁺, while the reduction of EC starts at a slightly lower potential (0.8 V vs. Li/Li⁺, cf. Figure 3b). Therefore, MUI seems to prevent the reduction of EC to a certain extent by participation in the SEI formation process. As a result, the addition of MUI leads to a decrease in C_{Eff} of 4% (86.0 vs. 89.7%) for the first cycle. Especially, the in this case high amount of MUI leads to a deteriorated performance of the graphitic anode.

Furthermore, MUI shows a clear influence on the LNMO composite cathode (cf. Figure 4). This effect is assumed to be reproducible for NCM cathodes and supposed to be the main working mechanism for MUI in NCM111/graphite cells. In comparison to the RE, the delithiation of LNMO is shifted by 100 mV to higher potential when MUI was applied. From this measurement the lithiation/delithiation potential was arbitrarily defined as the potential where the specific current reaches its maximum (in this case 0.18 mA mg⁻¹). The increase in specific current above 4.9 V vs. Li/Li⁺ indicates that the film formed on the cathode surface may not be stable above 5 V vs. Li/Li⁺. However, no decent oxidation peak occurs in the first cycle (cf. Figure 4). Only a slight oxidation between 4.3 V and 4.7 V vs. Li/Li⁺ is measurable (cf. Figure 4b). The appearance of an overpotential on the cathode is more meaningful for the investigation of the decomposition of MUI on the positive electrodes. Even with a lower amount of MUI (0.1 wt.%) in the electrolyte, the delithiation potential is shifted towards higher potentials.

### Electrochemical performance of MUI in NCM111/LTO cells

A lithium titanium oxide (Li₄Ti₅O₁₂, LTO)-based composite electrode is used as anode in order to prevent unintentional reduction reactions of MUI, as it has a relatively high working potential of 1.5 V vs. Li/Li⁺, which is higher than the reduction potential of MUI (0.9 V).

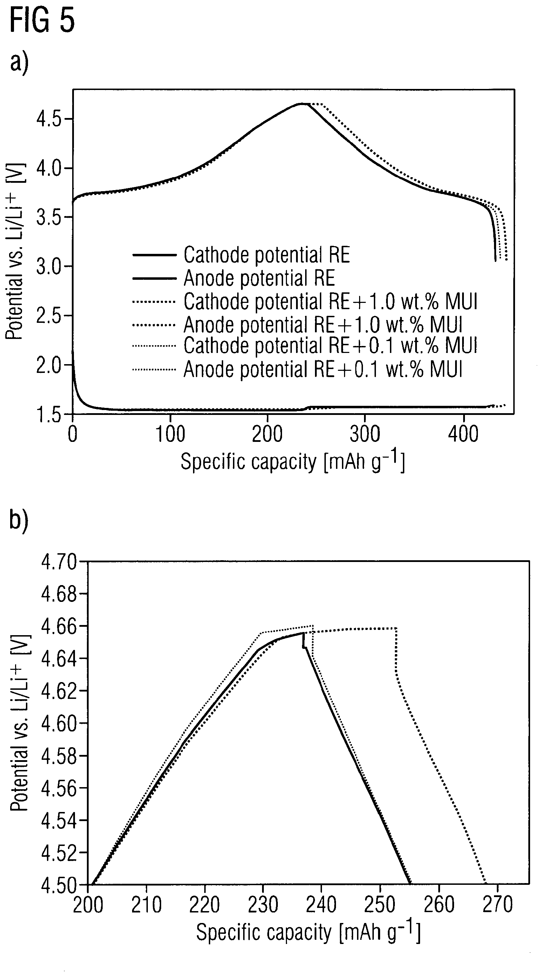

In Figure 5 the potential profiles of the anode and cathode of NCM111/LTO cells containing either 1.0 wt.% or 0.1 wt.% MUI are depicted. In comparison to the NCM111/graphite system, no visible reduction of MUI takes place on the LTO composite anodes.

However, at both lower and higher concentrations (0.1 wt.% and 1.0 wt.%), MUI shows influence on the positive electrode at the upper cathode cut-off potential (4.6 V vs. Li/Li⁺). In comparison to the previous results (cf. the oxidative decomposition of MUI in LNMO/Li metal cells), it can be assumed that a decomposition layer on the cathode is formed. During the constant current charging step, both cells with and without MUI possess similar potential profiles. However, during the constant potential step (CP), the MUI-containing cells exhibit a larger charge capacity. As a result, the cell holds off longer at the upper cut-off voltage (4.6 V), which leads to a longer duration for oxidative decomposition of the additive. While for high concentrations this effect is particularly pronounced, this effect is diminished in the electrolyte with 0.1 wt.% MUI, but still obvious. Furthermore, the addition of MUI leads to an increased potential drop at the beginning of discharge (Table 2).

**Table 2**

| **Cycle No.** | **RE** | | **RE + 0.1 wt.% MUI** | | **RE + 1.0 wt.% MUI** | |
|---|---|---|---|---|---|---|
| | potential drop | Resis tance | potential drop | Resist ance | potential drop | Resistan ce |
| | [mV] | [Ω] | [mV] | [Ω] | [mV] | [Ω] |
| **1^{st} (0.1C)** | 8.4 | 35.0 | 10.3 | 43.2 | 14.0 | 59.8 |
| **2^{nd} (0.1C)** | 8.8 | 36.9 | 10.6 | 44.3 | 13.4 | 57.1 |
| **3^{rd} (0.1C)** | 10.3 | 43.1 | 10.3 | 43.3 | 13.8 | 58.8 |
| **10^{th} (0.5C)** | 37.2 | 31.3 | 41.9 | 35.3 | 52.8 | 45.2 |

This effect can be observed in the formation cycles as well as in the ongoing cycling at higher charge/discharge rates, which indicates an irreversible resistance increase on the cathode surface, which might be related to an increasing surface layer growth. In the first cycle, the potential drop amounts to 8.4 mV for the reference electrolyte, while the addition of 0.1 wt.% or 1.0 wt.% MUI results in a potential drop increase to 10.3 and 14.0 mV, respectively.

Interestingly, this effect is reproducible for the ongoing cycles during formation as well as for cycling at higher charge/discharge rates. While a higher potential drop during formation can be assumed as a temporary effect due to uneven or incomplete SEI/CEI formation, a higher potential drop in the ongoing cycles means an irreversible resistance increase at the surface of the cathode. As an increased resisistance on the electrode is mostly caused by the oxidative decomposition of certain additives on the surface, this indicates an electronic passivation of the NCM111 cathode by the addition of MUI into the electrolyte. Based on the potential drops and the specific current, it is possible to calculate the ohmic resistance of the cell (Table 2). While for the reference electrolyte an initial resistance of 35 Ω is measurable, the internal resistance increases with the concentration of MUI in the electrolyte. In the ongoing cycles, this resistance increase is still present, again indicating the formation of a CEI layer on the surface of the electrode. Further surface analytical methods (XPS, TOF-SIMS) were conducted and are presented in the following to elucidate the working mechanism of MUI on NCM111 cathodes.

### Study of the decomposition products of MUI in the electrolyte and at the NCM111 cathode surface

Possible decomposition products of MUI in the electrolyte as well as on the positive electrode surface in NCM111/LTO cells after 25 charge/discharge cycles were investigated by means of LC-IT-ToF/MS, whereas surface investigations were carried out by ToF-SIMS and XPS.

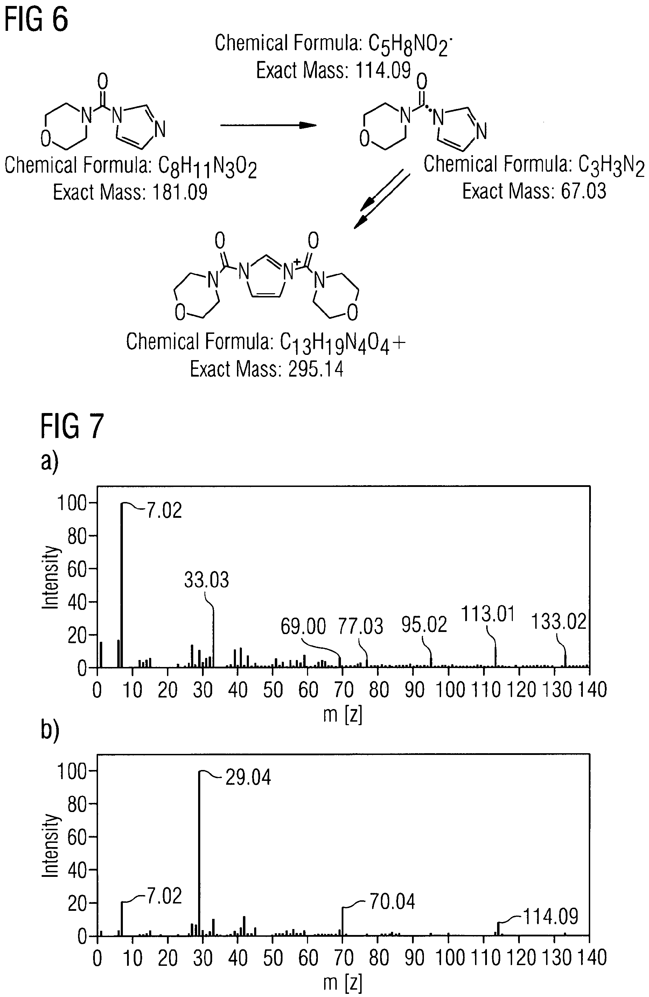

The presence of several decomposition products of MUI in the electrolyte can be excluded by LC/MS. Therefore the decomposition of MUI takes mainly place at the electrode surface and no characteristic species of MUI are found in the electrolyte. In Figure 6, a proposed in-source fragmentation mechanism of MUI is drawn. During the ionization process the single-bond between the carbonyl carbon atom and the aromatic nitrogen atom breaks to form two fragment ions. One fragment has the m/z of 114.09 and is shown in the mass spectrum, while the imidazole-fragment (m/z 68.03) is not detectable by LC/MS. A second ion (m/z 295.14) can be the product of an intermolecular reaction between the first MUI fragment (m/z 114.09) and MUI (m/z 182.09).

ToF-SIMS is a versatile surface analysis technique which has been applied for SEI investigations and depth-profiling on electrode surfaces. The positive mass spectrum from ToF-SIMS in Figure 7a shows pronounced peaks at nominal m/z ratios of 33.03 (CH₂F⁺), 69.00 (CF₃⁺) , 77.03 (C₃H₃F₂⁺), 95.02 (C₂H₃F₃⁺), 113.01 (C₃HF₄⁺) and 133.02 (C₃H₂F₅⁺), which can be assigned to hydrofluorocarbon compounds representing the PVdF binder of the cathode. A representative positive ToF-SIMS mass spectrum for cathodes cycled in the electrolyte containing the MUI additive is displayed in Figure 7b. While most of the previously mentioned binder signals cannot be distinguished from the background noise, two distinctive new peaks appear in the spectrum. The distinctive signal at m/z 29.04 can be correlated to an in-source fragmentation to generate a Li2NH+ ion. Beside a pronounced peak with m/z 70.04, an additional peak at m/z 114.09 is detectable at the surface of the cycled NCM111 cathode with the MUI-containing electrolyte. Although the molecular structure corresponding to the peak at m/z 70.04 cannot be clearly identified, this species is likely related to the electrochemical decomposition of MUI. Further, the peak at m/z 114.09 agrees well with the results by LC-IT-ToF/MS of the aged electrolyte and can be assigned to a fragmentation reaction of MUI. Therefore, it can be assumed that the 4-morpholinecarbonyl cation (m/z 114.09) was deposited on the cathode surface to form a decomposition layer. However, the likely generated imidazole radical cation (m/z 67.03 Figure 6) cannot be found within the ToF-SIMS spectra. As the electrodes were washed with a large amount of DMC prior to the measurement, the priorly mentioned decomposition products of MUI are incorporated within a durable and insoluble CEI layer at the cathode surface.

Additionally, a respective ToF-SIMS spectrum of a blank cathode, which was exposed to MUI-containing electrolyte without electrochemical cycling was measured and confirmed the decomposition of MUI on the surface and excluded a physical adsorption of the additive on the cathode surface.

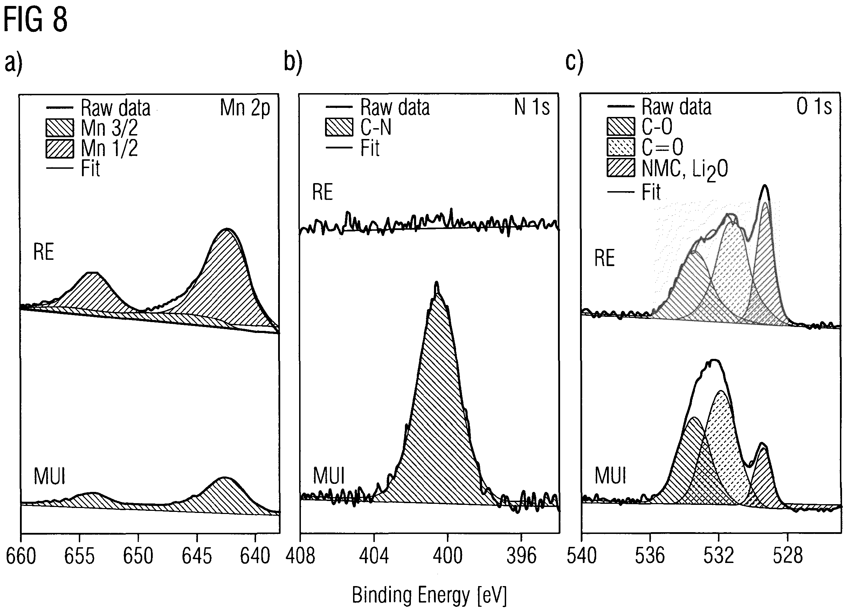

To further investigate the composition of the CEI layer on the cathode surface, ToF-SIMS depth-profiling measurements were performed using an Ar-GCIB or Cs⁺ sputter gun. According to literature these sputter guns are used for different purposes. Ar-GCIBs are often used for the analysis of organic or polymeric structures, while Cs-sputter guns are used for elemental analysis. The depth-profiles of the cathode cycled in baseline electrolyte and the one in MUI-containing electrolyte are compared in Figure 8. Figure 8a shows the depth-profiles of the NCM111 cathode cycled in RE. As expected, the intensity of the signals from ⁵⁹Co, ⁵⁸Ni and ⁵⁵Mn stay constant upon sputtering, since the active material is homogeneously distributed in-depth within the whole electrode. The signals from binder in Figure 8a decrease with increasing sputtering time. This can be caused by a more severe etching of the organic species by Ar-GCIBs compared to inorganic species, which corporates well with the literature, where Ar-GCIBs are reported to show a clear preferential sputtering for organic species. To exclude a falsification of the results by the preferential sputtering of organic species on the NCM111 cathode surface, a Cs+ sputter gun was used to verify the previous results. Thereby, a more uniform sputtering of the entire composite electrode (organic and inorganic species) is assumed. The representative spectra are shown in Figure 8c, respectively. As shown in Figure 8b, the previously found fragment peaks (m/z 70.04 and 114.09, cf. Figure 7b) diminish in intensity during sputtering. The signals for ⁵⁹Co, ⁵⁸Ni and ⁵⁵Mn increase while the fragment peaks decrease. In agreement with this, the lithium peak in Figure 7b slightly increases during the depth-profiling, while the fluorine signal slightly decreases. In Figure 7c the lithium intensity is decreasing upon sputtering, which can be due to the removal of inorganic lithium containing species, like residual conductive salt, by the more effective erosion by the Cs⁺ sputter gun.

Based on these results, the formation of a CEI layer at the surface of the NCM111 cathode in NCM111/LTO cells by addition of MUI into the electrolyte is confirmed. While the previous ToF-SIMS results revealed that the found fragments are not based on fluorine species, the exact composition of the CEI is not yet clarified. However, these results confirm a film formation by the addition of MUI into the electrolyte that is deposited at the positive electrode surface. With sputtering, it was possible to remove this CEI layer, leading to an exposure of the pristine NCM111 active material.

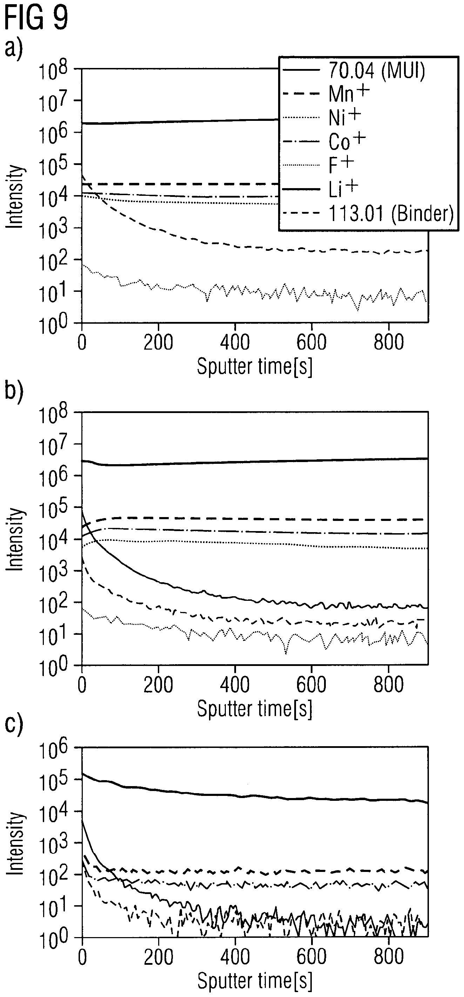

A comparison of the XPS spectra for the surface of NCM111 cathodes cycled in the RE and MUI-containing electrolytes are shown in Figure 9. The corresponding elemental concentrations obtained by XPS are listed in Table 3. Hereby, a high nitrogen content of 7%, alongside with increased concentrations of fluorine and phosphorus species at the surface of MUI-containing cathodes was identified.

| Table 3: Element concentrations at the surface of the aged NMC111 electrodes with and without 1.0 wt.% MUI-containing electrolyte. | | | | | | |
|---|---|---|---|---|---|---|
| | **Mn [%]** | **F [%]** | **O [%]** | **N [%]** | **C [%]** | **P [%]** |
| **RE** | 1.38 ± 0.03 | 25.1 ± 0.48 | 12.7 ± 1.04 | - | 60.2 ± 1.32 | 0.66 ± 0.14 |
| **RE+MUI** | 0.36 ± 0.03 | 27.0 ± 0.34 | 11.2 ± 0.39 | 7.22 ± 0.60 | 52.8± 1.67 | 1.46 ± 0.14 |

In Figure 9a, the Mn 2p spectra for both cathodes are depicted. In agreement with the previous results from the ToF-SIMS measurements, the manganese signal diminishes in intensity when MUI is added to the electrolyte. This further confirms a formation of a relatively thick CEI caused by the oxidative decomposition of MUI on the cathode surface. In the N 1s spectrum (Figure 9b), the peak at 400.5 eV can be attributed to the pyrrolic-type nitrogen (C-N) which is present in the morpholine structure. A peak at 398.5 eV for the pyridinic-type nitrogen (C=N) from the imidazole ring in MUI has been reported. However, it is not observable in the spectrum of MUI containing cells. This could be a further hint for an oxidative decomposition of the imidazole ring and a conversion from the pyridinic-type into an pyrrolic-type nitrogen. In correlation to the ToF-SIMS signal at m/z 70.04 (Figure 6b), a protonated species of the imidazole fragment is feasible, as no pyridinic-type nitrogen is present in the XPS spectrum of the cycled cathode. However, the exact composition of the surface layer is not yet elucidated. In the O 1s spectra, peaks at 533.4, 532.0 and 529.4 eV are assigned to C-O, C=O and NCM/Li₂O (lattice oxygen), respectively. Compared to the cathodes in the RE, the cathodes in MUI-containing electrolyte possess similar peak intensities of the C-O and C=O signals, but decreased intensities of NCM/Li₂O. This indicates an increase in the decomposition layer thickness formed on the positive electrode cycled in the MUI-containing electrolyte. The respective spectra for C 1s, F 1s and P 2p, particularly, the P 2p spectra of the cathodes in MUI-containing electrolyte, show a strongly decreased signal from the LiPOₓF_{y} species, while an increased signal from LiPFx can be observed. Therefore, LiPFₓ species may be incorporated with MUI in the CEI layer at the cathode surface. In the C 1s spectra, the peaks that are attributed to the conductive carbon, are decreased in intensity for the MUI-based electrolyte, again confirming a film formation by the addition of MUI.

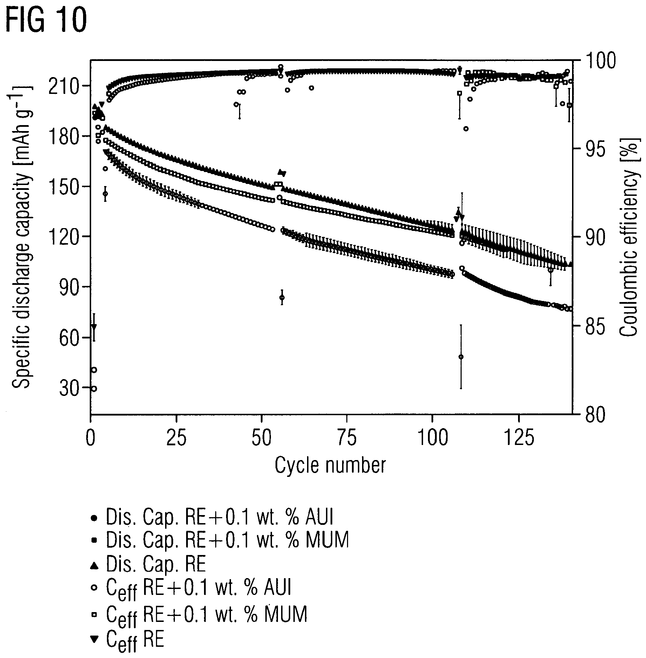

The mean values as well as the standard deviation of three cells for the charge/ discharge cycling performance of NCM111/graphite cells, with and without 0.1 wt.% AUI (N-phenyl-1H-imidazole-1-carboxamide) or 0.1 wt.% MUM (dimorpholinomethanone) as electrolyte additive, are shown in Figure 10.

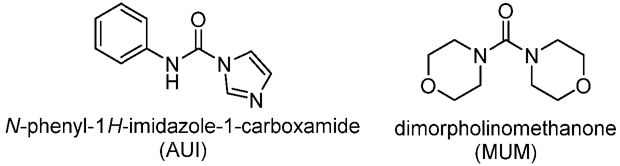

The additive concentration was set to 0.1 wt.% in terms of the total amount of electrolyte comprising lithium hexafluorophosphate in a solvent or solvent mixture to be consumed during the formation process and to form protective SEI (solid electrolyte interphase)/CEI-layers.

Already in the first formation cycles, the cells with the AUI- and the MUM-containing electrolyte show a decreased discharge capacity as well as a deteriarated C_{Eff}. This effect becomes more pronounced for AUI for higher formation cycles, whereas the values for the MUM-containing electrolyte with respect to the discharge capacity as well as C_{Eff} start to align with the values for RE after 100 cycles.

Therefore, the addition of AUI or MUM to the RE does not lead to any improvement with respect to discharge capacity or C_{Eff}.

According to the present invention, (1H-imidazol-1-yl) (morpholino)methanone (MUI), was shown to act as a highly effective cathode electrolyte interphase (CEI)- electrolyte additive for NCM cathodes in LIBs operated at high-voltage. With the use of only 0.1 wt.% MUI, NCM111/graphite LIB cells showed a superior charge/discharge cycling performance upon cycling at high voltage (4.6 V), compared to the carbonate-based reference electrolyte with and without some promising, literature-known additives. The capacity retention could be improved by 16% after 200 cycles compared to the RE, while the capacity retention of FEC-containing cells was outperformed by the addition of MUI by even 7%. Furthermore, MUI is a very effective and therefore cost efficient compound for the application in NCM/graphite cells, as only 0.1 wt.% of MUI surpass the other electrolyte formulations.

The present invention provides a variety of different urea-based electrolyte additives that are accessible by variation of the substituents enabling to customize the electrochemical properties.

### Examples

### Example 1: Synthesis of urea-based electrolyte additives

### Example 1.1: Synthesis of (1H-imidazol-1-yl) (morpholino)methanone

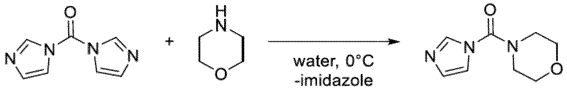

Morpholine (2.61 g, 30 mmol, 1.0 eq., Sigma Aldrich, purity: 99.5%) was dissolved in 50 mL water and stirred at 0 °C in an ice bath for 10 min. Carbonyldiimidazole (5.84 g, 36 mmol, 1.2 eq., Sigma Aldrich, purity: reagent grade) was slowly added to the mixture and the suspension was stirred for further 2 h and subsequently warmed up to room temperature. The colorless solution was extracted five times with ethyl acetate (5 x 20 mL, Sigma Aldrich, purity: ACS reagent, 99.5%), and the combined organic solutions were washed trice with de-ionized water (3 x 20 mL) dried by magnesium sulfate (Sigma Aldrich, purity: ≥98%) and then filtered. The solvent was removed under reduced pressure with a rotary evaporator. The crude product was obtained as an off-white solid. It was further purified by flash chromatography with acetone as solvent. The solid was recrystallized from hot acetone (Merck Millipore, purity: 99.8%) and washed with diethyl ether (Merck Millipore, purity: 99.7%).

NMR: δ: 1H (400 MHz, CDCl3, TMS): δ = 7.85 (m, 1H), 7.17 (t, 1H), 7.08 (t, 2H), 3.73 (t, 4H), 3.61 (t, 4H). 13C (400 MHz, CDCl3, TMS): δ = 150.94, 136.93, 130.03, 117.88, 66.53, 46.82.

### Example 1.2: N-phenyl-1H-imidazole-1-carboxamide (AUI) (not according to the invention)

Aniline (2.79 g, 30 mmol, 1.0 eq.) was dissolved in 50 mL water and stirred at 0 °C. Carbonyldiimidazole (5.84 g, 36 mmol, 1.2 eq.) was slowly added to the mixture and the suspension was stirred for further 1 h and subsequently warmed to room temperature. A white solid precipitated from the reaction mixture, which was filtrated and washed with ice water (50 mL). The crude product was dried, to remove residual moisture and furthermore recrystallized from hot acetone to obtain the target compound as colorless, needlelike crystals.

### Analytics:

1H-NMR (400 MHz, CDCl3, TMS): δ = 9.60 (s, 1H), 8.26 (s, 1H), 7.51 (m, 2H), 7.44 (m, 2H), 7.14 (m, 1H), 7,01 (m, 1H). 13C-NMR (400 MHz, CDCl3, TMS): δ = 147.07, 136.75, 136.17, 129.75, 129.33, 125.58, 121.27, 117.33.

### Example 1.3: 1,3-Dibenzylurea (DBU) (not according to the invention)

Benzylamine (1.07 g, 10 mmol, 1.0 eq.) was dissolved in 30 mL water and stirred at 0 °C. Carbonyldiimidazole (1.95 g, 12 mmol, 1.2 eq.) was slowly added to the mixture and the suspension was stirred for further 2 h and subsequently warmed to room temperature. Afterwards, benzylamine (1.29 g, 12 mmol, 1.2 eq.) was slowly added to the reaction and stirred at room temperature overnight. The white precipitate was collected by filtration and subsequently washed with cold water (20 mL). Recrystallization from hot acetone provides the title compound as colorless, needlelike crystals.

### Analytics:

1H-NMR (400 MHz, CDCl3, TMS): δ = 7.30 - 7.22 (m, 10H), 6.09 (s, 2H), 4.32 (s, 4H).

13C-NMR (400 MHz, CDCl3, TMS): δ = 158.10, 138.93, 128.66, 127.42, 127.31, 44.59.

### Example 1.4: 1,3-Diphenylethylurea (DPEU) (not according to the invention)

Phenylethylamine (1.21 g, 10 mmol, 1.0 eq.) was dissolved in 30 mL water and stirred at 0 °C. Afterwards, carbonyldiimidazole (1.95 g, 12 mmol, 1.2 eq.) was added slowly to the mixture and the suspension was stirred for further 2 h and subsequently warmed to room temperature. Then, phenylethylamine (1.45 g, 12 mmol, 1.2 eq.) was slowly added to the suspension and stirred at room temperature overnight. The white precipitate was collected by filtration and subsequently washed with cold water (20 mL). Recrystallization from hot acetone provides the title compound as colorless, needlelike crystals.

### Analytics:

1H-NMR (400 MHz, CDC13, TMS) : δ = 7.39 - 7.23 (m, 10H) , 5.51 (s, 1H) , 3.46 (m, 2H) , 2.83 (m, 2H) .

13C-NMR (400 MHz, DMSO, TMS) : δ = 158.02, 139.16, 128.84, 128.60, 128.42, 41.64, 36.41.

### Example 2: Electrode and electrolyte preparation

The electrolyte preparation and storage as well as the cell manufacturing were carried out in an argon-filled glove box (H₂O and O₂ contents < 0.1 ppm). All indicated mixing ratios are based on the mass ratio (% by weight).

For the preparation of the additive electrolytes according to the invention, (1H-imidazol-1-yl) (morpholino)methanone (MUI) was added to this electrolyte mixture. The proportion of the additive (A) indicated in % by weight refers to the electrolyte (E) with additive (A), not to the entire electrolyte mixture including additive, that is, W (A) = m (A) / (m (E) + m (A)).

The electrodes were prepared in a large scale at the MEET Battery Research Center, University of Münster. The cathode contains 93 wt.% LiNi_{1/3}Mn_{1/3}Co_{1/3}O₂ (NCM111; CATL), 4 wt.% carbon black (Super C65, Imerys) and 3 wt.% polyvinylidene difluoride (PVdF, Solef 5130, Solvay) as binder. N-methylpyrrolidone (NMP, ALDRICH) was used as dispersant. The LiNi_{1/3}Co_{1/3}Mn_{1/3}O₂ powder was sieved (75 µm) and dried under vacuum for 24 h at 60 °C to prevent agglomerates and remove residual moisture. PVdF and NMP were added into an air-tight container and homogenized over night by a shear mixer at 2500 rpm. Afterwards, carbon black and NCM111 was homogenized to the solution and mixed for 1.5 h under low vacuum and water cooling. After optimization of viscosity the solid content reached 50%. The electrode paste was cast onto an aluminum foil (Evonik Industries) with an average mass loading of 2.1 mAh cm⁻². The electrodes were calendered to reach a density of 3.0 g cm⁻³. The LiNi_{0.5}Mn_{1.5}O₄ (LNMO) cathodes, which were used for oxidative electrolyte stability investigations, were manufactured with the same procedure as the NCM111 cathodes with a mass loading of 2.1 mAh cm⁻².

The anode contains 94.5 wt.% graphite (FSNC-1; Shanshan Technology; D50 = 15.0 ± 2.0 µm; BET surface area = 1.3 ± 0.3 m² g⁻¹), 1.0 wt.% carbon black (Super C65, Imerys), 2.25 wt.% styrene butadiene rubber (SBR, Lipaton SB 5521, Polymer Latex GmbH) and 2.25 wt.% sodium carboxymethyl cellulose (Na-CMC, Walocel CRT 2000 PPA 12, Dow Wolff Cellulosics) ), demineralized water was used as a dispersant. Based on the viscosity the solid loading was optimized to 54%. The electrode paste was coated onto copper foil (Evonik Industries) with a mass loading of 2.7 mAh cm⁻². The electrodes were calendered to reach a density of 1.5 g cm⁻³. LTO-based anodes (3.5 mAh cm⁻²), which were used for the investigation of the oxidative decomposition of MUI in NCM111/LTO cells, were purchased from Customcells (Itzehoe). Prior to cell assembly, all electrodes were dried under reduced pressure at 120 °C. For the LIB cell investigations, the capacity ratio between the NCM111 cathode and anode was set as 1:1.125, to avoid lithium metal plating at the graphite anode.

A mixture of ethylene carbonate (EC) and ethyl methyl carbonate (EMC) (3:7 by weight, Solvionic, purity: battery grade) containing 1 M LiPF₆ was used as reference electrolyte (RE). MUI was added into the reference electrolyte with the desired amount (0.1% or 1.0%) by weight ratio in an argon filled glove box.

### Example 3: Cell setup and electrochemical characterization

All electrochemical investigations were performed using three-electrode Swagelok cells in climatic chambers at 20°C. Lithium metal (Albemarle Corporation; purity: battery grade) was used as the reference electrode (REF; Ø=5 mm). A polypropylene nonwoven (Freudenberg 2190, 3 layers) was used as separator. Each cell contained in total 200 µL (120 µL + 80 µL for REF) electrolyte and were assembled in an argon filled glove box. It has to be kept in mind that a much larger amount of electrolyte is used in these laboratory cells compared to commercial cells, therefore, the percentage(s) of the studied electrolyte additive most likely need to be adjusted when going to commercial cells formats.

Cyclic voltammetry (CV) measurements were performed in three-electrode cells with lithium metal as REF and counter electrodes (CE), against either graphite or LNMO-based composite working electrodes. In the cathodic scan (graphite vs. Li), the cells were cycled between 0.05 V and 3.0 V vs. Li/Li+ with a scan rate of 0.05 mV s-1 for three times; while in the anodic scan (LNMO vs. Li), the cut-off potentials were set as 3.0 V and 5.0 V vs. Li/Li+. The measurement was performed using a VMP potentiostat (Biologic Science Instruments).

Long-term charge/discharge cycling of full cells was evaluated by a battery tester Series 4000 (MACCOR). NCM111/graphite LIB cells were cycled in a voltage range from 2.8 V to 4.6 V with three formation cycles with a charge and discharge rate of 20 mA g⁻¹, equal to a C-rate of 0.1C (based on the specific capacity of NCM111 at 4.6 V vs. Li/Li+, 200 mAh g-1, obtained from 3-electrode measurements), followed by subsequent cycles with a charge/discharge rate of 60 mA g-1 (corresponding to 0.3C). Each charging step included a constant voltage step at 4.6 V until the current dropped below 0.05C. Two recovery cycles were performed after each 50 cycles, with a low charge/discharge current of 0.1C. The NCM111/LTO cells were cycled in a voltage range from 1.5 V to 3.1 V with three formation cycles with a charge and discharge rate of 20 mA g⁻¹ followed by subsequent cycles with a charge/discharge rate of 100 mA g-1.

Each charging step included a constant voltage step at 3.1 V until the current dropped below 0.05C.

### Example 4: Ex situ analysis

### Example 4.1: Liquid chromatography/high resolution mass spectrometry

The NCM111/LTO cells with/without additive were cycled for 25 cycles and stopped in the discharged state. Afterwards, the cells were disassembled inside the glovebox, and the electrolyte was extracted from the separator by centrifugation. 10 µL of the extracted electrolyte were diluted with 1 mL methanol. The measurement was carried out on the Shimadzu Nexera X2 UHPLC system (Kyoto, Japan). 5 µL of the diluted sample were injected on the Hypersil GOLD C4 column (150×2.1 mm, 3 µm; Thermo Fisher Scientific, Waltham, MA, USA) by the SIL-30AC autosampler with a flow rate of 0.3 mL min-1 (A: 0.1% formic acid + 5% methanol; B: methanol). The oven temperature was set to 40 °C. The separation was performed in gradient elution mode starting at 5% B (methanol) constant for 5 min, increasing B concentration to 70% in 10 min and kept constant for further 10 min. Afterwards the gradient was set at 5% to equilibrate. The UHPLC system was coupled to the LCMS-IT-TOF^{™} from Shimadzu (Kyoto, Japan). The ionization was performed with electrospray ionization in the positive mode at 4.5 kV. The curved desolvation line temperature was 230 °C, the heat block temperature 230 °C and the nebulizing gas flow was set to 1.5 L min-1. The pressure of the nitrogen drying gas was 102 kPa, the detector voltage at 1.76 kV. The mass range was set from 100-500 Da.

### Example 4.2: Time-of-flight secondary ion mass spectrometry

After cell disassembly in the discharged state in the glovebox, the cathodes were washed five times with 1 mL DMC. The volatile compounds were removed under reduced pressure and the electrodes were transferred to the device without any contact to air. Time-of-flight secondary ion mass spectrometry (ToF-SIMS) data were acquired on a TOF.SIMS 5 spectrometer (ION-TOF GmbH, Münster) equipped with bismuth liquid metal ion gun (Bi-LMIG, 30 kV) and reflectron mass analyzer. All measurements were performed with an analysis pressure of <10⁻⁹ mbar. Surface spectra were acquired in the high-current bunched mode providing a pulsed primary ion beam of Bi⁺/Bi³⁺ corresponding to a target current of about 1 pA. The raster size was set to 300x300 µm within a cycle time of 200 µs. Depth-profiling was performed by sputtering with an argon gas cluster ion beam source (Ar-GCIB, 10 nA beam current) or an Cs ion beam source (500 eV, 50 nA beam current). Spectra in positive polarity were calibrated based on ⁵⁹Co, ⁵⁸Ni, ⁵⁵Mn, and ⁷Li₂.

### Example 4.3: X-ray photoelectron spectroscopy

X-ray photoelectron spectroscopy (XPS) measurements were carried out on an Axis Ultra DLD (Kratos) using a monochromatic Al Kα X-ray source (hv = 1486.6 eV) at 10 mA filament current and 12 kV filament voltage. For charge compensation, a charge neutralizer was used during the experiment. All measurements were performed with an analysis pressure of <10⁻⁹ mbar. A pass energy of 40 eV at a 0° angle of emission was used during the measurement. The C 1s peak at 284.5 eV (corresponding to C-C/C-H bonds) was used as internal reference to adjust the energy scale within the spectra. The fitting was carried out with the help of CasaXPS. The electrodes were prepared with the same procedure as for the ToF-SIMS analysis.

## Claims

1. A lithium battery comprising:
- an anode comprising an active anode material
- a cathode comprising an active cathode material comprising lithium nickel manganese cobalt oxide (LiNiₓCo_{y}Mn_{1-x-y}O₂) (NCM) with each of x and y not including zero and x + y being smaller than 1
- a separator separating anode and cathode, and an electrolyte wherein the electrolyte comprises a solvent or solvent mixture and lithium hexafluorophosphate, **characterized in that**
the electrolyte further comprises an urea-based electrolyte additive, wherein the urea-based electrolyte additive is (1H-imidazol-1-yl) (morpholino)methanone (MUI) of formula 2

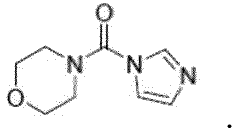

2. The lithium battery according to claim 1, wherein the active cathode material is selected from the group consisting of NCM with 0.3≤x<1.

3. The lithium battery according to one of the preceding claims, wherein, in terms of the total amount of electrolyte comprising lithium hexafluorophosphate in a solvent or solvent mixture, 0.01 to 10 wt.-%, preferably 0.1 to 5 wt.-%, more preferably 0.2 to 1 wt.-%, in particular 0.25 to 0.75 wt.-% urea-based electrolyte additive.

4. The lithium battery according to one of the preceding claims, wherein the concentration of lithium hexafluorophosphate is in the range of 0.1 M to 2 M, preferably 0.5 M to 1.5 M, more preferably 0.7 M to 1.2 M.

5. The lithium battery according to one of the preceding claims, wherein the solvent or solvent mixture is selected from an organic solvent or solvent mixture, an ionic liquid and/or a polymer matrix.

6. The lithium battery according to one of the preceding claims, wherein the organic solvent or solvent mixture is selected from the group consisting of ethylene carbonate, propylene carbonate, diethyl carbonate, dimethyl carbonate, ethyl methyl carbonate, acetonitrile, glutaronitrile, adiponitrile, pimelonitrile, gamma-butyrolactone, gamma-valerolactone, dimethoxyethane, 1,3-dioxolane, methylacetate and/or mixtures thereof, preferably selected from the group consisting of ethylene carbonate, diethyl carbonate, dimethyl carbonate, ethyl methyl carbonate and/or mixtures thereof.

7. The lithium battery according to one of the preceding claims, wherein the organic solvent mixture comprises, preferably consists of, a mixture from ethylene carbonate and at least one further solvent, preferably ethyl methyl carbonate, preferably in a ratio in terms of weight parts of > 1 :99 to < 99: 1, more preferably from > 1 :9 to < 9: 1 , in particular from ≥ 3 :7 to ≤ 1 : 1.

8. The lithium battery according to one of the preceding claims, wherein the electrolyte further comprises an additive selected from the group consisting of chlorethylene carbonate, fluorethylene carbonate, vinylene carbonate, vinylethylene carbonate, ethylene sulfite, ethylene sulfate, propane sulfonate, sulfite, preferably dimethylsulfite and propylene sulfite, sulfate, butyrolactone optionally substituted with F, Cl or Br, phenylethylene carbonate, vinylacetate and trifluoropropylene carbonate.

9. The lithium battery according to one of the preceding claims, wherein the active anode material is selected from the group consisting of carbon, graphite, mixtures of silicon and carbon/graphite, silicon, tin, lithium-metal oxide, materials that form alloys with lithium, composites und mixtures thereof, preferably carbon, graphite, mixtures of silicon and carbon/graphite and composites and mixtures thereof.

10. Use of (1H-imidazol-1-yl) (morpholino)methanone (MUI)as additive in a lithium battery as defined in one of claims 1 to 9 for enhancing one characteristic selected from the group consisting of reversible capacity, Coulomb efficiency, cyclic stability and combinations thereof.

## Patentansprüche

1. Lithiumbatterie, aufweisend:
- eine Anode, die ein aktives Anodenmaterial aufweist,
- eine Kathode, die ein aktives Kathodenmaterial aufweist, das ein Lithium-Nickel-Mangan-Kobalt-Oxid (LiNiₓCo_{y}Mn_{1-x-y}O₂) (NCM) enthält, wobei x und y jeweils nicht Null umfassen und x + y kleiner als 1 ist,
- einen Separator, der die Anode und die Kathode trennt, und einen Elektrolyten, wobei der Elektrolyt ein Lösungsmittel oder Lösungsmittelgemisch und Lithiumhexafluorphosphat umfasst, **dadurch gekennzeichnet, dass**
der Elektrolyt darüber hinaus ein harnstoffbasiertes Elektrolytadditiv umfasst, wobei das harnstoffbasierte Elektrolytadditiv (1H-Imidazol-1-yl) (morpholin)methanon (MUI) der Formel 2

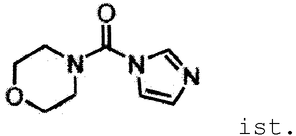

2. Lithiumbatterie nach Anspruch 1, wobei das aktive Kathodenmaterial aus der aus NCM bestehenden Gruppe ausgewählt ist, mit 0,3≤x<1,

3. Lithiumbatterie nach einem der vorhergehenden Ansprüche, wobei hinsichtlich der Gesamtmenge des Elektrolyten, aufweisend Lithiumhexafluorphosphat in einem Lösungsmittel oder Lösungsmittelgemisch, 0,01 bis 10 Gew.-%, vorzugsweise 0,1 bis 5 Gew.-%, noch bevorzugter 0,2 bis 1 Gew.-%, insbesondere 0,25 bis 0,75 Gew.-% des harnstoffbasierten Elektrolytadditivs.

4. Lithiumbatterie nach einem der vorhergehenden Ansprüche, wobei die Konzentration von Lithiumhexafluorphosphat im Bereich von 0,1 M bis 2 M, vorzugsweise 0,5 M bis 1,5 M, noch bevorzugter 0,7 M bis 1,2 M liegt.

5. Lithiumbatterie nach einem der vorhergehenden Ansprüche, wobei das Lösungsmittel oder Lösungsmittelgemisch aus einem organischen Lösungsmittel oder Lösungsmittelgemisch, einer ionischen Flüssigkeit und/oder einer Polymermatrix ausgewählt ist.

6. Lithiumbatterie nach einem der vorhergehenden Ansprüche, wobei das organische Lösungsmittel oder Lösungsmittelgemisch ausgewählt ist aus der Gruppe bestehend aus Ethylencarbonat, Propylencarbonat, Diethylcarbonat, Dimethylcarbonat, Ethylmethylcarbonat, Acetonitril, Glutaronitril, Adiponitril, Pimelonitril, Gamma-Butyrolacton, Gamma-Valerolacton, Dimethoxyethan, 1,3-Dioxolan, Methylacetat und/oder Gemischen davon, vorzugsweise ausgewählt ist aus der Gruppe bestehend aus Ethylencarbonat, Diethylcarbonat, Dimethylcarbonat, Ethylmethylcarbonat und/oder Gemischen davon.

7. Lithiumbatterie nach einem der vorhergehenden Ansprüche, wobei das organische Lösungsmittelgemisch ein Gemisch aufweist, vorzugsweise aus einem Gemisch besteht, und zwar einem Gemisch aus Ethylencarbonat und mindestens einem weiteren Lösungsmittel, vorzugsweise Ethylmethylcarbonat, vorzugsweise in einem Verhältnis hinsichtlich der Gewichtsteile von > 1:99 bis < 99:1, noch bevorzugter von > 1:9 bis < 9:1, insbesondere von ≥ 3:7 bis ≤ 1:1.

8. Lithiumbatterie nach einem der vorhergehenden Ansprüche, wobei der Elektrolyt darüber hinaus ein Additiv aufweist, das ausgewählt ist aus der Gruppe bestehend aus Chlorethylencarbonat, Fluorethylencarbonat, Vinylencarbonat, Vinylethylencarbonat, Ethylensulfit, Ethylensulfat, Propansulfonat, Sulfit, vorzugsweise Dimethylsulfit und Propylensulfit, Sulfat, Butyrolacton, gegebenenfalls substituiert mit F, Cl oder Br, Phenylethylencarbonat, Vinylacetat und Trifluorpropylencarbonat.

9. Lithiumbatterie nach einem der vorhergehenden Ansprüche, wobei das aktive Anodenmaterial ausgewählt ist aus der Gruppe bestehend aus Kohlenstoff, Graphit, Gemischen aus Silizium und Kohlenstoff/Graphit, Silizium, Zinn, Lithium-Metalloxid, Materialien, die Legierungen mit Lithium bilden, Verbundstoffe und Gemische davon, vorzugsweise Kohlenstoff, Graphit, Gemische aus Silizium und Kohlenstoff/Graphit und Verbundstoffe und Gemische davon.

10. Verwendung von (1H-imidazol-1-yl) (morpholin)methanon (MUI) als Additiv in einer Lithiumbatterie nach einem der Ansprüche 1 bis 9 zur Verbesserung einer Eigenschaft, die ausgewählt ist aus der Gruppe bestehend aus reversibler Kapazität, Coulomb-Effizienz, zyklischer Stabilität und Kombinationen daraus.

## Revendications

1. Batterie au lithium, comprenant :
- une anode comprenant un matériau actif d'anode,
- une cathode comprenant un matériau actif de cathode qui contient un oxyde de lithium-nickel-manganèse-cobalt (LiNiₓCo_{y}Mn_{1-x-y}O₂) (NCM), x et y n'étant pas nuls et x + y étant inférieur à 1,
- un séparateur qui sépare l'anode et la cathode, et un électrolyte, l'électrolyte comprenant un solvant ou un mélange de solvants et de l'hexafluorophosphate de lithium, **caractérisée en ce que**
l'électrolyte comprend en outre un additif électrolytique à base d'urée, l'additif électrolytique à base d'urée étant (1H-imidazol-1-yl) (morpholin)méthanone (MUI) de formule 2

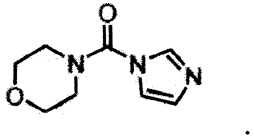

2. La batterie au lithium selon la revendication 1, sachant que le matériau actif de cathode est choisi dans le groupe constitué par le NCM, avec 0,3 ≤ x < 1.

3. La batterie au lithium selon l'une des revendications précédentes, sachant que, par rapport à la quantité totale d'électrolyte, comprenant de l'hexafluorophosphate de lithium dans un solvant ou un mélange de solvants, 0,01 à 10 % en poids, de préférence 0,1 à 5 % en poids, de préférence encore 0,2 à 1 % en poids, en particulier 0,25 à 0,75 % en poids, de l'additif électrolytique à base d'urée.

4. La batterie au lithium selon l'une des revendications précédentes, sachant que la concentration d'hexafluorophosphate de lithium est comprise entre 0,1 M et 2 M, de préférence entre 0,5 M et 1,5 M, et de préférence encore entre 0,7 M et 1,2 M.

5. La batterie au lithium selon l'une des revendications précédentes, sachant que le solvant ou le mélange de solvants est choisi parmi un solvant organique ou un mélange de solvants organiques, un liquide ionique et/ou une matrice polymère.

6. La batterie au lithium selon l'une des revendications précédentes, sachant que le solvant organique ou le mélange de solvants est choisi dans le groupe constitué par le carbonate d'éthylène, le carbonate de propylène, le carbonate de diéthyle, le carbonate de diméthyle, le carbonate d'éthylméthyle, l'acétonitrile, le glutaronitrile, l'adiponitrile, le pimélonitrile, la gamma-butyrolactone, la gamma-valérolactone, le diméthoxyéthane, 1,3-dioxolane, acétate de méthyle et/ou des mélanges de ceux-ci, de préférence choisi dans le groupe constitué par le carbonate d'éthylène, le carbonate de diéthyle, le carbonate de diméthyle, le carbonate d'éthylméthyle et/ou des mélanges de ceux-ci.

7. La batterie au lithium selon l'une des revendications précédentes, sachant que le mélange de solvants organiques présente un mélange, de préférence est constitué d'un mélange, à savoir un mélange de carbonate d'éthylène et d'au moins un autre solvant, de préférence le carbonate d'éthylméthyle, de préférence dans un rapport en parties en poids de > 1:99 à < 99:1, de préférence > 1:9 à < 9:1, en particulier ≥ 3:7 à ≤ 1:1.

8. La batterie au lithium selon l'une des revendications précédentes, l'électrolyte contenant en outre un additif choisi dans le groupe constitué par le carbonate de chloréthylène, le carbonate de fluoroéthylène, le carbonate de vinylène, le carbonate de vinyléthylène, le sulfite d'éthylène, le sulfate d'éthylène, le propanesulfonate, le sulfite, de préférence le sulfite de diméthyle et le sulfite de propylène, le sulfate, la butyrolactone, éventuellement substituée par F, Cl ou Br, carbonate de phényléthylène, l'acétate de vinyle et le carbonate de trifluoropropylène.

9. La batterie au lithium selon l'une des revendications précédentes, le matériau actif d'anode étant choisi dans le groupe constitué par le carbone, le graphite, des mélanges de silicium et de carbone/graphite, le silicium, étain, l'oxyde métallique de lithium, des matériaux formant des alliages avec le lithium, des matériaux composites et mélanges de ceux-ci, de préférence le carbone, le graphite, des mélanges de silicium et de carbone/graphite ainsi que des matériaux composites et mélanges de ceux-ci.

10. Utilisation de (1H-imidazol-1-yl) (morpholin)méthanone (MUI) comme additif dans une batterie au lithium selon l'une des revendications 1 à 9, pour améliorer une propriété choisie dans le groupe constitué par la capacité réversible, l'efficacité coulombienne, la stabilité cyclique et des combinaisons de celles-ci.
